# EUROPEAN PATENT SPECIFICATION

(11) **EP 0 345 763 B1**
(45) Date of publication and mention of the grant of the patent: **09.06.1993**
(21) Application number: 89110306.1
(22) Date of filing: 07.06.1989
(51) Int. Cl.: C09D 11/00

(54) **Recording solution**
Aufzeichnungslösung
Solution d'enregistrement

(30) Priority: 07.06.1988 JP 138555/88; 07.03.1989 JP 52805/89; 07.03.1989 JP 52806/89
(43) Date of publication of application: 13.12.1989
(73) Proprietor: CANON KABUSHIKI KAISHA, Tokyo (JP)
(72) Inventor: Shirota, Katsuhiro, Hiratsuka-shi Kanagawa-ken (JP); Nishiwaki, Osamu, Atsugi-shi Kanagawa-ken (JP); Iwata, Kazuo, Yokohama-shi Kanagawa-ken (JP); Tochihara, Shinichi, Hadano-shi Kanagawa-ken (JP)
(74) Representative: Blumbach Weser Bergen Kramer

(56) References cited:
- PATENT ABSTRACTS OF JAPAN, vol. 8, no. 184 (C-239)[1621], 23rd August 1984; & JP-A-59 78 273 (MITSUBISHI KASEI KOGYO) 07-05-1984
- PATENT ABSTRACTS OF JAPAN, vol. 11, no. 167 (C-425)[2614], 28th May 1987; & JP-A-62 567 (ALPS ELECTRC CO.) 06-01-1987
- PATENT ABSTRACTS OF JAPAN, vol. 10, no. 390 (C-394)[2447], 26th Decembe 1986; & JP-A-61 176 677 (RICOH CO.) 08-08-1986
- PATENT ABSTRACTS OF JAPAN, vol. 9 no. 32 (C-265)[1755], 9th February 1985; & JP-A-59 176 367 (FUJITSU) 05-10-1984

## Description

### BACKGROUND OF THE INVENTION

### Field of the Invention

The present invention relates to a recording solution (hereinafter "ink"), and more particularly to an ink suited for systems in which a record is made on a plain paper by ejecting ink, which is flown in the form of droplets, from a minute ejection opening (or ejection orifice) provided in a recording head.

### Related Background Art

Hitherto having been used as inks in writing utensils such as fountain pens and felt pens are those comprising various types of dye dissolved in water or other organic solvent.

Inks comprising various types of dye dissolved in water or other organic solvent are also used in ink-jet systems in which recording is performed by ejecting ink from an ejection orifice provided in a recording head, by the action of the oscillation attributable to a piezoelectric oscillator or the electrostatic force attributable to the application of a high voltage. However, the inks for ink-jet systems are required to satisfy more severe conditions with respect to many performances than those required in the writing utensils such as fountain pens and felt pens commonly used.

The ink-jet systems make a less noise and can afford to perform high-speed recording or color recording on a plain paper without taking any particular fixing step, and researches have been energetically made on various types.

Various methods are available for the systems of this type, but all of them are required to have the performances such that the physical properties such as viscosity and surface tension are within the range of suitability, the recording agent has a solution stability high enough not to cause clogging of the minute ejection orifice, a recorded image can be obtained in a sufficiently high density, and changes in the values of physical properties, precipitation of solid contents, or the like may not occur during storage.

In addition to the above performances, they are also required to have the properties that the recording can be performed without limitation on the type of recording members, they can achieve a high fixing speed, and they can give a recorded image with excellent water resistance, solvent resistance (resistance to alcohol, in particular), light-resistance, wear resistance, and resolution.

However, recorded images formed using conventional inks, in particular, water-based links, tend to cause feathering or blur, or color fading, owing to adhesion of water or irradiation by light. This tendency is remarkable particularly in a magenta recording, and links improved to eliminate these disadvantages have been strongly sought.

For example, Japanese Patent Laid-Open No. 59-78273 discloses an ink comprising a specific monoazo dye having a phenyl group and a naphthyl group.

When a recording is performed on a plain paper by using such an ink, the resulting recorded image can have a light-resistance greatly superior to that of inks comprising a conventional magenta dye, but can not still have a water resistance having reached a level high enough for practical use.

### SUMMARY OF THE INVENTION

Accordingly, an object of the present invention is to provide a magenta color ink that has overcome the disadvantages involved in the above prior art.

In other words, it is to provide a recording solution that gives an image superior in tone sharpness, and also superior in light-resistance and water resistance, of the resulting recorded image when recording is performed on a plain paper.

Another object of the present invention is to provide a novel blue ink and a novel red ink that give recorded images having a superior tone brilliancy, light-resistance and water resistance.

The above objects can be attained by the invention described below.

Summarily stated, the present invention provides a recording solution, comprising a recording agent which is a component that forms a recorded image and a liquid medium in which said recording agent is dissolved or dispersed, wherein said recording agent comprises a dye represented by the following Formula (A) 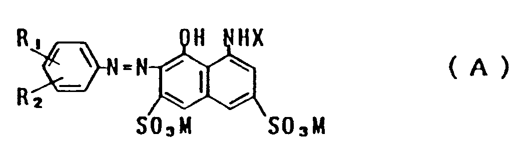
R₁ and R₂ represent each a radical selected from the group of hydrogen, a methyl radical, a methoxy radical, a chlorine atom, a sulfonic acid residue, a phenoxy radical, 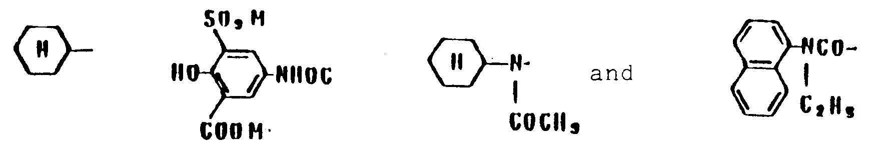
X represents a residual group of an organic acid; and M represents a base selected from the group consisting of an alkali metal group, an ammonium group, and an organic amine group; and at least one dye selected from the group consisting of C.I. Acid Red 131, C.I. Acid Red 274, C.I. Direct Red 227 and C.I. Direct Red 9.

The present invention also provides a recording solution, comprising a recording agent which is a component that forms a recorded image and a liquid medium in which said recording agent is dissolved or dispersed, wherein said recording agent comprises a magenta component and a yellow component said magenta component being composed of a dye represented by the following Formula (A) 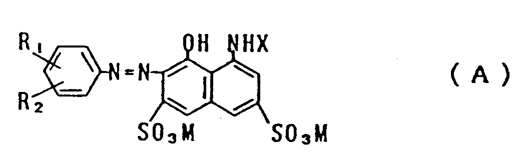
wherein R₁ and R₂ are as defined above; X represents a residual group of an organic acid; and M represents a base selected from the group consisting of an alkali metal group, an ammonium group, and an organic amine group; and C.I. Direct Red 227; said yellow component being composed of at least one of C.I. Direct Yellow 86 and C.I. Direct Yellow 142.

The present invention further provides a recording solution, comprising a recording agent which is a component that forms a recorded image and a liquid medium in which said recording agent is dissolved or dispersed, wherein said recording agent comprises a magenta component and a cyan component, said magenta component being composed of a dye represented by the following Formula (A) 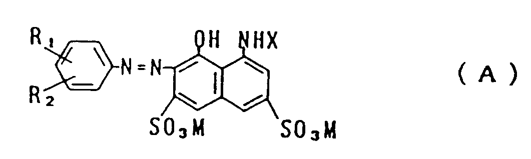
wherein R₁ and R₂ are as defined above; X represents a residual group of an organic acid; and M represents a base selected from the group consisting of an alkali metal group, an ammonium group, and an organic amine group; and C.I. Direct Red 227; said cyan component being composed of at least one selected from the group consisting of C.I. Direct Blue 199, C.I. Direct Blue 66 and C.I. Acid Blue 198.

### DETAILED DESCRIPTION OF THE PREFERRED EMBODIMENTS

To achieve the objects of the present invention, the present inventors made detailed studies on dyes, the recording agent components of inks, in particular, on magenta dyes. As a result, they found that a specific combination of dyes is preferred as the recording agent of inks, particularly as the recording agent of inks used in the ink-jet systems, and employment of such a specific combination of dyes as the recording agent of inks can bring about an ink capable of giving a recorded image having a very brilliant tone and satisfying the water resistance, light-resistance, resolution, alcohol resistance, and other required performances, when used in the ink-jet systems.

The present invention will now be described below in greater detail by giving preferred embodiments.

The dye represented by the above Formula (A) includes any dyes so long as it is included in the above Formula (A), but particularly preferred examples thereof include the following. These are exemplified as sodium salts, but may also be formed into salts with any bases, such as lithium salts, potassium salts, ammonium salts and organic amine salts.

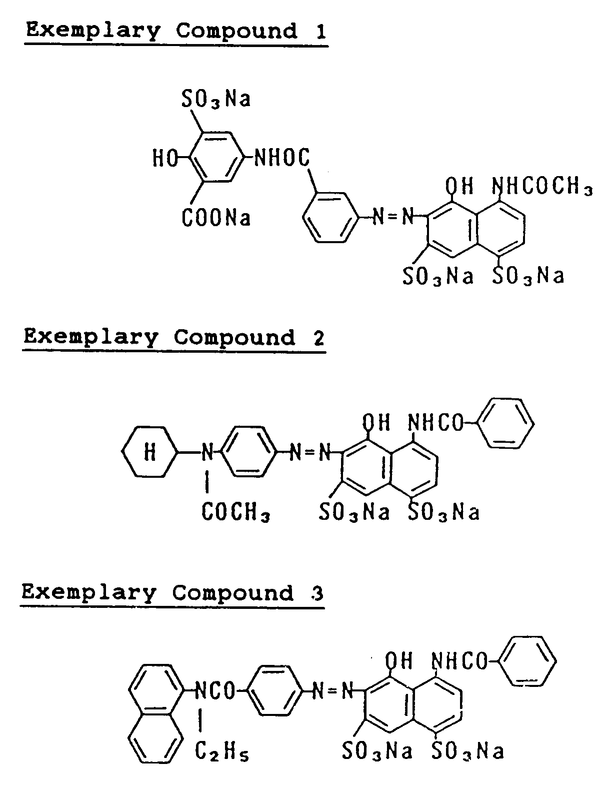

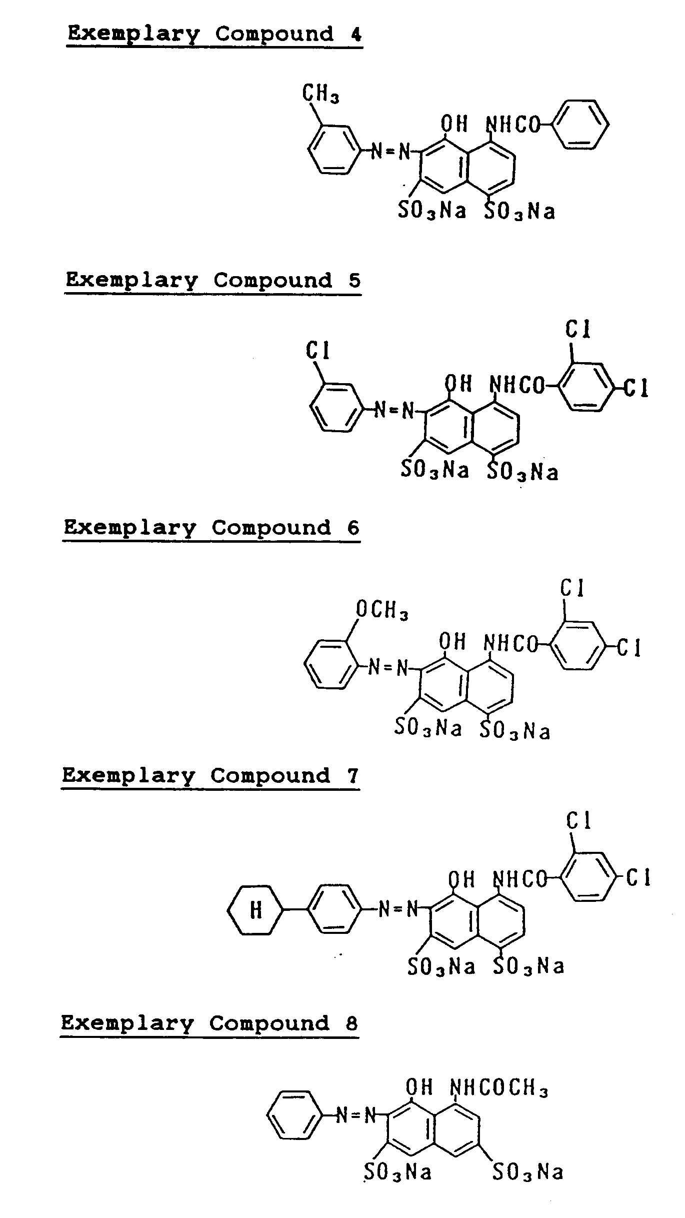

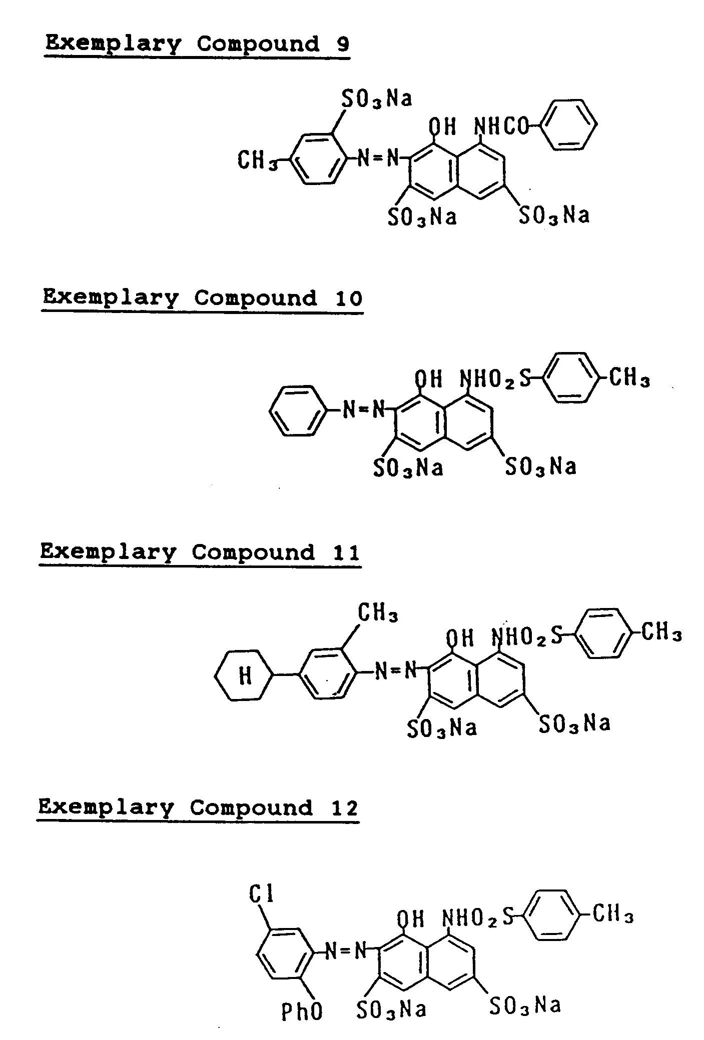

The present invention is mainly characterized by the combination of the dye (A) as described above with at least one selected from the group consisting of C.I. Acid Red 131, C.I. Acid Red 274, C.I. Direct Red 227 and C.I. Direct Red 9, and a magenta ink resulting from such a specific combination can give a recorded image concurrently having very superior tone brilliancy, light-resistance and water resistance as compared with conventional inks of the same kinds of colors.

In particular, a remarkable effect can be obtained when the C.I. Direct Red 227 is selected as the dye used in combination with the dye (A).

The total content of the above dyes is designed according to the type of the liquid medium component and the performances required in inks, but, in general, may be in the range of from 0.1 to 20 % by weight, preferably from 0.5 to 15 % by weight, and more preferably from 1 to 10 % by weight, based on the total weight of an ink. As to the amount of these dyes used, the effect of the present invention can be most remarkably achieved when the dye (A) is used in a proportion of from 20 to 80 % by weight, and preferably from 30 to 70 % by weight, based on the total weight of the dyes. In addition to these specific dyes, it is of course possible to use other various dyes such as direct dyes and acid dyes in combination.

In particular, as a red ink, the magenta component consisting of the dye (A) and C.I. Direct Red 227, as described above, can be used in combination with a yellow component consisting of any one or both of C.I. Direct Yellow 86 and C.I. Direct Yellow 142, thereby giving a recorded image concurrently having very superior tone brilliancy, light-resistance and water resistance as compared with conventional red inks.

As to the amount of these dyes used, the effect of the present invention can be most remarkably achieved when the dye (A) is used in a proportion of from 10 to 90 % by weight, and preferably from 20 to 70 % by weight, and C.I. Direct Red 227 is used in a proportion of from 20 to 60 % by weight, based on the total weight of the dyes.

As a blue ink, the magenta component consisting of the dye (A) and C.I. Direct Red 227, as described above, can also be used in combination with a cyan component consisting of any one or both of C.I. Direct Blue 199, C.I. Direct Blue 86, and C.I. Acid Blue 198. The ink thus obtained from such a specific combination can give a recorded image concurrently having very superior tone brilliancy, light-resistance and water resistance as compared with conventional blue inks.

As to the amount of these dyes used, the effect of the present invention can be most remarkably achieved when the dye (A) is used in a proportion of from 2 to 50 % by weight, and preferably from 5 to 40 % by weight, and C.I. Direct Red 227 is used in a proportion of from 5 to 30 % by weight, based on the total weight of the dyes.

The solvent preferably used in the ink of the present invention is water or a mixed solvent comprising water and a water soluble organic solvent. Particularly preferred is the mixed solvent comprising water and a water soluble organic solvent, and containing a polyhydric alcohol as the water-soluble organic solvent, which has the effect of prevention to dry an ink. As the water, it is preferred to use not the common water, containing various ions, but deionized water. The water-soluble organic solvent used by being mixed with water includes, for example, alkyl alcohols having 1 to 4 carbon atoms, such as methyl alcohol, ethyl alcohol, n-propyl alcohol, isopropyl alcohol, n-butyl alcohol, sec-butyl alcohol, tert-butyl alcohol and isobutyl alcohol; amides such as dimethylformamide and dimethylacetamide; ketones or ketoalcohols such as acetone and diacetone alcohol; ethers such as tetrahydrofuran and dioxane; polyalkylene glycol such as polyethylene glycol and polypropylene glycol; alkylene glycols comprising an alkylene group having 2 to 6 carbon atoms, such as ethylene glycol, propylene glycol, butylene glycol, triethylene glycol, 1,2,6-hexanetriol, thiodiglycol, hexylene glycol and diethylene glycol; glycerol; lower alkyl ethers of polyhydric alcohols, such as ethylene glycol methyl or ethyl ether, diethylene glycol methyl or ethyl ether, triethylene glycol methyl or ethyl ether; ureas such as urea, thiourea and ethyleneurea; N-methyl-2-pyrrolidone, and 1,3-dimethyl-2-imidazolidinone.

Of these many water-soluble organic solvents, it is preferred to use a polyhydric alcohol such as ethylene glycol, thiodiglycol or glycerol as a main solvent in combination with an aliphatic monovalent alcohol such as methyl alcohol, ethyl alcohol, isopropyl alcohol or n-butyl alcohol, when taking account of instances in which a recording medium comprises a plain paper.

The above water-soluble organic solvent may be contained in the ink in an amount of generally from 1 to 50 % by weight, and preferably from 5 to 30 % by weight, based on the total weight of the ink. The content of the water used in the mixed solvent is designed in a vast range, depending on the type of the above organic solvent component, the composition thereof and the desired performances of inks, but should be within the range covering generally from 10 to 95 %, and preferably not less than 70 %, based on the total weight of the ink.

The ink of the present invention, made up with these components can be an excellent ink well balanced by itself in all the recording performances (such as signal response, droplet-forming stability, ejection stability, long-time continuous recording performance, and ejection stability after long-time stoppage of recording), shelf stability, and fixability to recording mediums, as well as the tone brilliancy, light-resistance, weathering resistance, water resistance and alcohol resistance of recorded images. For the purpose of further improving these performances, all sorts of conventionally known additives may also be further added and contained.

They include, for example, viscosity modifiers such as polyvinyl alcohol, celluloses and water-soluble resins; surface tension modifiers such as all sorts of cationic, anionic or nonionic surface active agents, diethanolamine and triethanolamine; pH adjusters, and mildewproofing agents.

A specific-resistance modifier such as lithium chloride, ammonium chloride or sodium chloride is also added in order to prepare inks used in ink-jet systems of the type the ink is electrostatically charged.

Values of thermal properties (as exemplified by specific heat, thermal expansion coefficient and thermal conductivity) may often be modified in instances that the ink is used in ink-jet systems of the type in which the ink is ejected by the action of thermal energy.

The ink of the present invention, as described above, is useful as inks for use in making records using various writing utensils, recording tools, etc., and particularly useful as inks for use in ink-jet systems. The ink-jet systems mentioned herein include any systems so long as they are systems in which an ink can be effectively released from a nozzle and transmitted to a recording medium serving as a target.

As described above, the ink of the present invention comprises the recording agent comprised of the dyes employed in a specific combination. Thus, it has superior recording performances such as long-term shelf stability, ejection stability and ejection response, also exhibits superior ink-fixing properties when it is applied on a plain paper, and particularly gives a recorded image having superior tone brilliancy, light-resistance and water resistance.

C.I. Direct Red 227 used in this invention has following features:
(1) Upon a visible ray spectrum (wave length 400 - 700 nm) and a tone measurements by spectrophotometer for an aqueous solution having a dye concentration of 20 ppm, a peak of a wave length of around 540 nm is found. The height is 0.68 - 0.78 and the CIEL*a*b* value is L*: 74 - 77, a*: 57 - 60 and b*: -12 - -15.
(2) The Rf value by means of a thin layer chromatography (at center of a spot) is 0.30 - 0.34, when an eluting solution of n-BuOH/pyridine/aqueous ammonia/ water = 8/4/4/3 is used.

### EXAMPLES

The present invention will be described below in greater detail by giving Examples and Comparative Examples. In the following, "part(s)" is by weight unless particularly mentioned.

### [Magenta ink]

### Example 1

| | |
|---|---|
| Exemplary Compound 4 | 0.4 part |
| C.I. Acid Red 131 | 1.6 parts |
| Diethylene glycol | 13 parts |
| Ethylene glycol | 5 parts |
| Ion-exchanged water | 80 parts |

The above components were thoroughly mixed and dissolved in a vessel, and the solution was pressure-filtered using a Teflon filter having a pore diameter of 0.45 µm, followed by deaeration treatment using a vacuum pump to obtain an ink of the present invention.

### Examples 2 to 4

Example 1 was repeated to obtain inks of the present invention, except that the following dyes were respectively used as the dye in Example 1.

| Example 2 | |
|---|---|
| Exemplary Compound 6 | 0.8 parts |
| C.I. Acid red 274 | 1.2 parts |

| Example 3 | |
|---|---|
| Exemplary Compound 9 | 0.8 parts |
| C.I. Direct Red 227 | 1.2 parts |

| Example 4 | |
|---|---|
| Exemplary Compound 10 | 1.1 parts |
| C.I. Direct Red 9 | 0.9 parts |

### Comparative Examples 1 to 8

Example 1 was repeated to obtain inks of the comparative examples, except that the following dyes were respectively used as the dye in Example 1.

| Comparative Example 1 | |
|---|---|
| Exemplary Compound 4 | 2 parts |

| Comparative Example 2 | |
|---|---|
| Exemplary Compound 6 | 2 parts |

| Comparative Example 3 | |
|---|---|
| Exemplary Compound 9 | 2 parts |

| Comparative Example 4 | |
|---|---|
| Exemplary Compound 10 | 2 parts |

| Comparative Example 5 | |
|---|---|
| C.I. Acid Red 131 | 2 parts |

| Comparative Example 6 | |
|---|---|
| C.I. Acid Red 274 | 2 parts |

| Comparative Example 7 | |
|---|---|
| C.I. Direct Red 227 | 2 parts |

| Comparative Example 8 | |
|---|---|
| C.I. Direct Red 9 | 2 parts |

Using the inks of Examples and Comparative Examples, obtained in the above, recordings were performed on Xerox 4024 papers by use of a recording apparatus having a recording head of an on-demand system in which ink is ejected by the operation of a piezoelectric oscillator (ejection orifice diameter: 50 µm; piezoelectric oscillator driving voltage: 80 V; frequency: 3 KHz), to obtain the results as shown in the following Table 1.

**Table 1**

| Ink | Light-resistance | Water resistance | Tone |
|---|---|---|---|
| Example: | | | |
| 1 | A | A | A |
| 2 | A | A | A |
| 3 | A | A | A |
| 4 | A | A | A |

| Comparative Example: | | | |
|---|---|---|---|
| 1 | A | C | A |
| 2 | A | C | A |
| 3 | A | C | A |
| 4 | A | C | A |
| 5 | C | A | C |
| 6 | C | A | C |
| 7 | C | A | C |
| 8 | C | A | C |

In the above, the light-resistance was based on the ΔE (CIEL*a*b*) after irradiation for 20 hours using Atlas Xenon Fadeometer, and evaluated as A for 0 to 10, as B for 11 to 20, and as C for more than 20.

The water resistance was based on the O.D. residual rate (%) after immersion for 5 minutes in water, and evaluated as A for 80 to 100 %, as B for 65 to 79 %, and as C for less than 65 %.

The tone was based on visual observation, and evaluated as A for a brilliant magenta color, as B for a slightly dark magenta color, and as C for a color deviated from the tone of a magenta color.

### [Blue ink]

### Example 5

| | |
|---|---|
| Exemplary Compound 9 | 0.25 part |
| C.I. Direct Red 227 | 0.25 part |
| C.I. Direct Blue 199 | 1.5 parts |
| Glycerol | 3 parts |
| Thiodiglycol | 7 parts |
| Isopropyl alcohol | 3 parts |
| Ion-exchanged water | 85 parts |

The above components were stirred thoroughly, followed by pressure filtration using Fluorobore Filter (trademark of a filter manufactured by Sumitomo Electric Industries, Ltd.) having a pore size of 0.45 µm, to obtain an ink of the present invention.

### Examples 6 to 9, Comparative Examples 9 to 13

Example 5 was repeated to obtain inks of the present invention and the comparative examples, except that the following components were used in the same way as Example 5.

| Example 6 | |
|---|---|
| Exemplary Compound 4 | 0.3 part |
| C.I. Direct Red 227 | 0.4 part |
| C.I. Direct Blue 86 | 1.8 parts |
| Urea | 5 parts |
| Ethyl alcohol | 5 parts |
| Ion-exchanged water | 87.5 parts |

| Example 7 | |
|---|---|
| Exemplary Compound 6 | 0.2 part |
| C.I. Direct Red 227 | 0.3 part |
| C.I. Acid Blue 198 | 1.5 parts |
| Glycerol | 6 parts |
| Thiodiglycol | 14 parts |
| Ethyl alcohol | 5 parts |
| Ion-exchanged water | 73.0 parts |

| Example 8 | |
|---|---|
| Exemplary Compound 9 | 0.4 part |
| C.I. Direct Red 227 | 0.4 part |
| C.I. Direct Blue 199 | 2.4 parts |
| Glycerol | 10 parts |
| Ethyl alcohol | 3 parts |
| Ion-exchanged water | 83.8 parts |

| Example 9 | |
|---|---|
| Exemplary Compound 10 | 0.6 part |
| C.I. Direct Red 227 | 0.4 part |
| C.I. Direct Blue 199 | 0.6 part |
| C.I. Acid Blue 198 | 0.2 part |
| C.I. Direct Blue 86 | 0.5 part |
| Diethylene glycol | 10 parts |
| Ethylene glycol | 5 parts |
| Ion-exchanged water | 82.7 parts |

### Comparative Example 9

Having the same composition as Example 5 except that the following dyes were used in place of the dye used in Example 5.

| | |
|---|---|
| Exemplary Compound 9 | 0.25 part |
| C.I. Direct Red 227 | 0.25 part |
| C.I. Acid Blue 9 | 1.5 parts |

### Comparative Example 10

Having the same composition as Example 6 except that the following dyes were used in place of the dye used in Example 6.

| | |
|---|---|
| Exemplary Compound 4 | 0.7 part |
| C.I. Direct Blue 86 | 1.8 parts |

### Comparative Example 11

Having the same composition as Example 7 except that the following dyes were used in place of the dye used in Example 7.

| | |
|---|---|
| C.I. Direct Red 227 | 0.5 part |
| C.I. Acid Blue 198 | 1.5 parts |

### Comparative Example 12

Having the same composition as Example 8 except that the following dye was used in place of the dye used in Example 8.

| | |
|---|---|
| C.I. Direct Blue 199 | 3.2 part |

### Comparative Example 13

Having the same composition as Example 9 except that the following dyes were used in place of the dye used in Example 9.

| | |
|---|---|
| C.I. Direct Red 227 | 1.0 parts |
| C.I. Direct Blue 86 | 1.3 parts |

The inks of the above Examples 5 to 9 and Comparative Examples 9 to 13 were each set in a recording apparatus having a multi-head of an on-demand system in which recording is performed by applying heat energy to the ink in the recording head to cause ink droplets to fly (ejection orifice diameter: 50 x 40 µm; driving voltage: 30 V; frequency: 4 KHz), and recordings were performed on Xerox 4024 copy papers. The recorded images were air-dried indoors for 4 hours, and evaluated for the water resistance, light-resistance and tone. Results obtained are shown in the following Table 2.

**Table 2**

| Ink | Light-resistance | Water resistance | Tone |
|---|---|---|---|
| Example: | | | |
| 5 | A | A | A |
| 6 | A | A | A |
| 7 | A | A | A |
| 8 | A | A | A |
| 9 | A | A | A |

| Comparative Example: | | | |
|---|---|---|---|
| 9 | C | C | A |
| 10 | B | C | A |
| 11 | B | A | C |
| 12 | A | A | C |
| 13 | A | A | B |

### [Red ink]

### Example 10

| | |
|---|---|
| Exemplary Compound 9 | 0.8 part |
| C.I. Direct Red 227 | 0.8 part |
| C.I. Direct Yellow 86 | 0.4 part |
| Glycerol | 3 parts |
| Thiodiglycol | 7 parts |
| Isopropyl alcohol | 3 parts |
| Ion-exchanged water | 85 parts |

The above components were stirred thoroughly, followed by pressure filtration using Fluorobore Filter (trademark of a filter manufactured by Sumitomo Electric Industries, Ltd.) having a pore size of 0.45 µm, to obtain an ink of the present invention.

### Examples 11 to 14, Comparative Examples 14 to 18

Example 10 was repeated to obtain inks of the present invention and the comparative examples, except that the following components were used in the same way as Example 10.

| Example 11 | |
|---|---|
| Exemplary Compound 4 | 1.0 parts |
| C.I. Direct Red 227 | 1.0 part |
| C.I. Direct Yellow 142 | 0.5 part |
| Urea | 5 parts |
| Ethyl alcohol | 5 parts |
| Ion-exchanged water | 87.5 parts |

| Example 12 | |
|---|---|
| Exemplary Compound 9 | 0.9 part |
| C.I. Direct Red 227 | 0.8 part |
| C.I. Direct Yellow 86 | 0.3 part |
| C.I. Direct Yellow 142 | 0.1 part |
| Glycerol | 10 parts |
| Ethyl alcohol | 2 parts |
| Ion-exchanged water | 85.9 parts |

| Example 13 | |
|---|---|
| Exemplary Compound 6 | 1.2 parts |
| C.I. Direct Red 227 | 1.0 part |
| C.I. Direct Yellow 86 | 0.5 part |
| Glycerol | 6 parts |
| Thiodiglycol | 14 parts |
| Ethyl alcohol | 5 part |
| Ion-exchanged water | 72.3 parts |

| Example 14 | |
|---|---|
| Exemplary Compound 10 | 1.3 parts |
| C.I. Direct Red 227 | 0.7 part |
| C.I. Direct Yellow 142 | 0.3 part |
| Diethylene glycol | 10 parts |
| Ethylene glycol | 5 parts |
| Ion-exchanged water | 82.7 parts |

### Comparative Example 14

Having the same composition as Example 10 except that Exemplary Compound 9 only was used in place of all the dyes in Example 10.

### Comparative Example 15

Having the same composition as Example 11 except that Exemplary Compound 4 only was used in place of all the dyes in Example 11.

### Comparative Example 16

Having the same composition as Example 12 except that C.I. Direct Red 227 only was used in place of all the dyes in Example 12.

### Comparative Example 17

Having the same composition as Example 13 except that 2.2 parts of C.I. Direct Red 9 and 0.5 part of C.I. Acid Yellow 23 were used in place of all the dyes in Example 13.

### Comparative Example 18

Having the same composition as Example 14 except that 2 parts of C.I. Acid Red 131 and 0.3 part of C.I. Acid Yellow 23 were used in place of all the dyes in Example 13.

The inks of Examples 10 to 14 and Comparative Examples 14 to 18 were each set in the recording apparatus as used in Example 5, and the water resistance, light-resistance and tone were evaluated in the same manner as Example 5. Results obtained are shown in the following Table 3.

**Table 3**

| Ink | Light-resistance | Water resistance | Tone |
|---|---|---|---|
| Example: | | | |
| 10 | A | A | A |
| 11 | A | A | A |
| 12 | A | A | A |
| 13 | A | A | A |
| 14 | A | A | A |

| Comparative Example: | | | |
|---|---|---|---|
| 14 | B | C | A |
| 15 | B | C | A |
| 16 | C | A | B |
| 17 | C | C | B |
| 18 | C | C | B |

## Claims

1. A recording solution, comprising a recording agent which is a component that forms a recorded image and a liquid medium in which said recording agent is dissolved or dispersed, wherein said recording agent comprises a dye represented by the Formula (A) 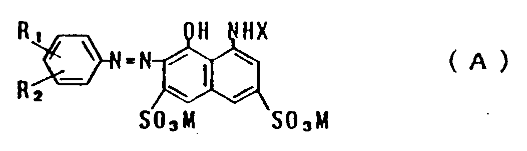 R₁ and R₂ represent each a radical selected from the group of hydrogen, a methyl radical, a methoxy radical, a chlorine atom, a sulfonic acid residue, a phenoxy radical, 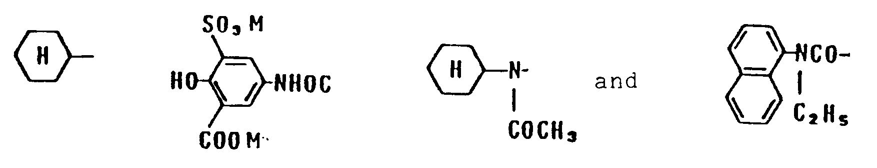 X represents a residual group of an organic acid; and M represents a base selected from the group consisting of an alkali metal group, an ammonium group, and an organic amine group; and at least one dye selected from the group consisting of C.I. Acid Red 131, C.I. Acid Red 274, C.I. Direct Red 227 and C.I. Direct Red 9.

2. The recording solution according to Claim 1, wherein said recording agent comprises the dye represented by Formula (A) and C.I. Direct Red 227.

3. The recording solution according to Claim 1, wherein said dye represented by Formula (A) is contained in an amount of from 20 to 80 % by weight based on the total weight of the recording agents.

4. A recording solution, comprising a recording agent which is a component that forms a recorded image and a liquid medium in which said recording agent is dissolved or dispersed, wherein said recording agent comprises a magenta component and a yellow component, said magenta component being composed of a dye represented by the Formula (A) 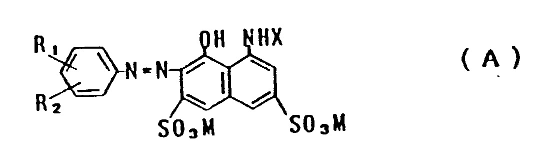 R₁ and R₂ represent each a radical selected from the group of hydrogen, a methyl radical, a methoxy radical, a chlorine atom, a sulfonic acid residue, a phenoxy radical, 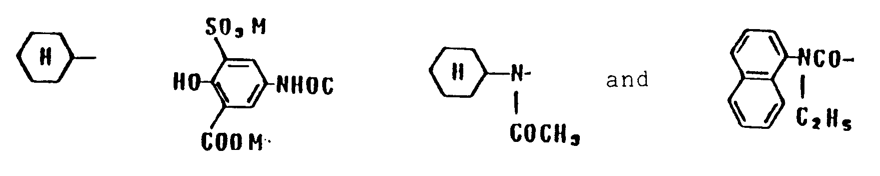 X represents a residual group of an organic acid; and M represents a base selected from the group consisting of an alkali metal group, an ammonium group, and an organic amine group; and C.I. Direct Red 227; said yellow component being composed of at least one of C.I. Direct Yellow 86 and C.I. Direct Yellow 142.

5. The recording solution according to Claim 4, which is used in a recording system in which recording is performed by applying a heat energy corresponding to a recording signal, to a recording solution in the room of a recording head, said energy causing ink droplets to fly onto a recording surface.

6. The recording solution according to Claim 4, wherein said dye represented by Formula (A) holds from 10 to 90 % by weight in the whole recording agents.

7. The recording solution according to Claim 4, wherein said C.I. Direct Red 227 holds from 20 to 60 % by weight in the whole recording agents.

8. The recording solution according to Claim 4, wherein said liquid medium comprises a polyhydric alcohol or an aliphatic monovalent alcohol.

9. The recording solution according to Claim 8, wherein said polyhydric alcohol is at least one selected from the group consisting of ethylene glycol, thiodiglycol and glycerol.

10. The recording solution according to Claim 8, wherein said aliphatic monovalent alcohol is selected from the group consisting of methyl alcohol, ethyl alcohol, isopropyl alcohol and n-butyl alcohol.

11. A recording solution, comprising a recording agent which is a component that forms a recorded image and a liquid medium in which said recording agent is dissolved or dispersed, wherein said recording agent comprises a magenta component and a cyan component, said magenta component being composed of a dye represented by the Formula (A) 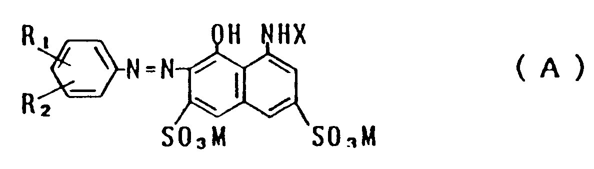 R₁ and R₂ represent each a radical selected from the group of hydrogen, a methyl radical, a methoxy radical, a chlorine atom, a sulfonic acid residue, a phenoxy radical, 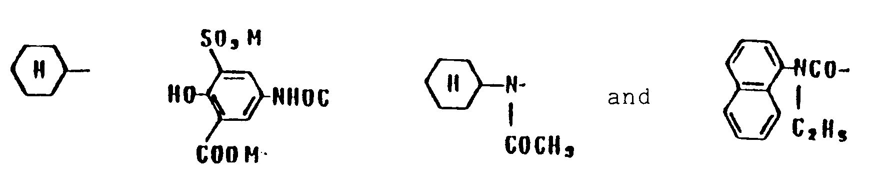 X represents a residual group of an organic acid; and M represents a base selected from the group consisting of an alkali metal group, an ammonium group, and an organic amine group; and C.I. Direct Red 227; said cyan component being composed of at least one selected from the group consisting of C.I. Direct Blue 199, C.I. Direct Blue 86 and C.I. Acid Blue 198.

12. The recording solution according to Claim 11, which is used in a recording system in which recording is performed by applying a heat energy corresponding to a recording signal, to a recording solution in the room of a recording head, said energy causing ink droplets to fly onto a recording surface.

13. The recording solution according to Claim 11, wherein said dye represented by Formula (A) holds from 2 to 50 % by weight in the whole recording agents.

14. The recording solution according to Claim 11, wherein said C.I. Direct Red 227 holds from 5 to 30 % by weight in the whole recording agents.

15. The recording solution according to Claim 11, wherein said liquid medium comprises a polyhydric alcohol or an aliphatic monovalent alcohol.

16. The recording solution according to Claim 15, wherein said polyhydric alcohol is at least one selected from the group consisting of ethylene glycol, thiodiglycol and glycerol.

17. The recording solution according to Claim 15, wherein said aliphatic monovalent alcohol is selected from the group consisting of methyl alcohol, ethyl alcohol, isopropyl alcohol and n-butyl alcohol.

18. The recording solution according to any one of claims 1, 4 and 11, wherein a compound of the formula (A) is at least one of the compounds as shown below:

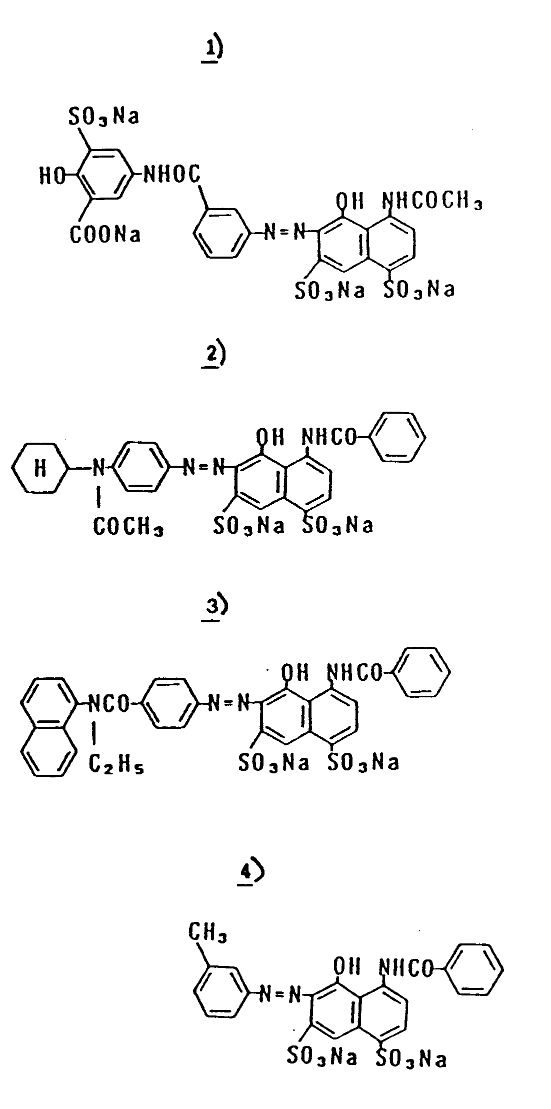

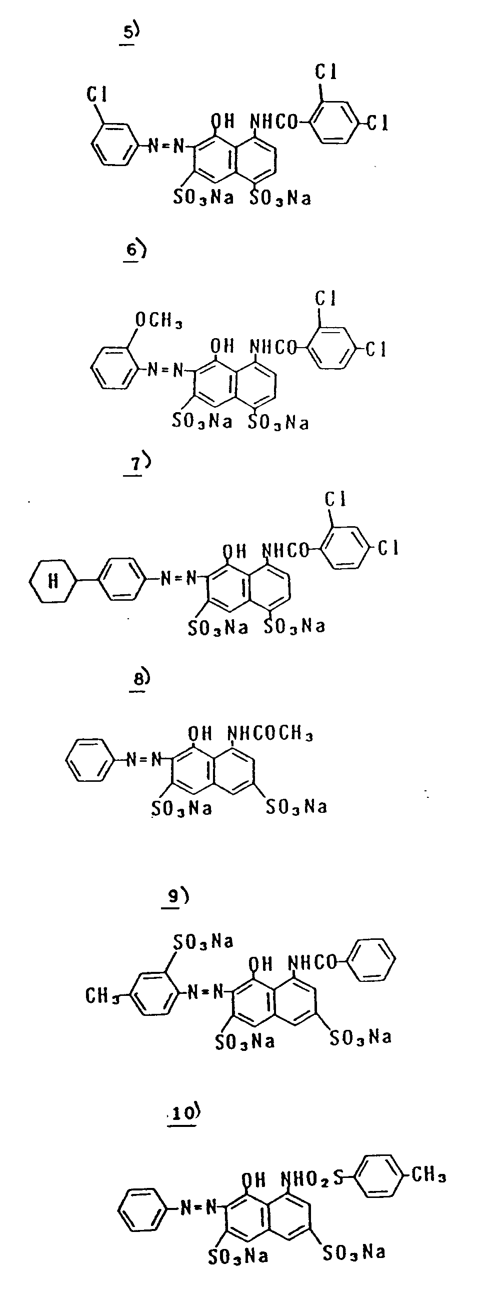

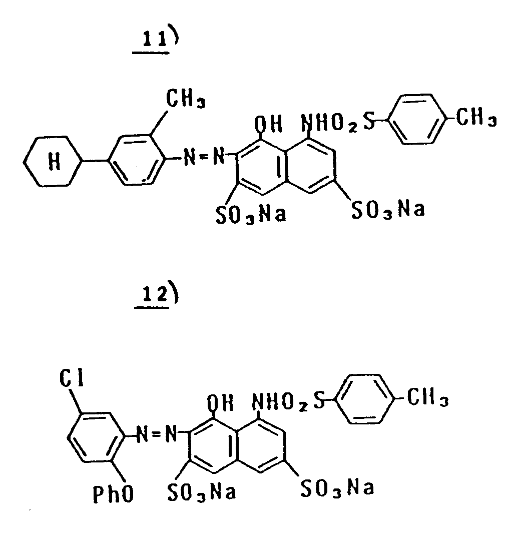

## Patentansprüche

1. Aufzeichnungslösung, die ein Aufzeichnungsmittel, bei dem es sich um eine Komponente handelt, die zu einem aufgezeichneten Bild führt, und ein flüssiges Medium, in dem das Aufzeichnungsmittel gelöst oder dispergiert ist, umfaßt, wobei das Aufzeichnungsmittel einen Farbstoff, der durch die folgende Formel (A) dargestellt wird: 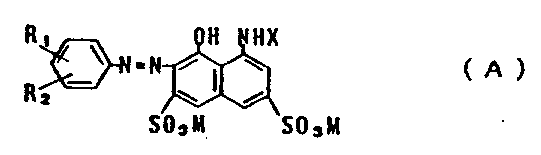 wobei R₁ und R₂ jeweils einen aus der aus Wasserstoff, einem Methylrest, einem Methoxyrest, einem Chloratom, einer Sulfonsäuregruppe, einem Phenoxyrest, 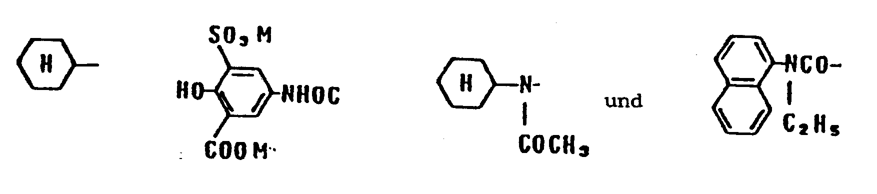 bestehenden Gruppe ausgewählten Rest darstellen, X die verbleibende Gruppe einer organischen Säure darstellt, und M einen aus der aus einem Alkalimetall, einer Ammoniumgruppe und einer organischen Amingruppe bestehenden Gruppe ausgewählten Basenbestandteil darstellt, und mindestens einen aus der aus C.I. Acid Red 131, C.I. Acid Red 274, C.I. Direct Red 227 und C.I. Direct Red 9 bestehenden Gruppe ausgewählten Farbstoff umfaßt.

2. Aufzeichnungslösung nach Anspruch 1, wobei das Aufzeichnungsmittel den durch die Formel (A) dargestellten Farbstoff und C.I. Direct Red 227 umfaßt.

3. Aufzeichnungslösung nach Anspruch 1, in der der durch die Formel (A) dargestellte Farbstoff in einer Menge von 20 bis 80 Gew.-%, bezogen auf das Gesamtgewicht des Aufzeichnungsmittels, enthalten ist.

4. Aufzeichnungslösung, die ein Aufzeichnungsmittel, bei dem es sich um eine Komponente handelt, die zu einem aufgezeichneten Bild führt, und ein flüssiges Medium, in dem das Aufzeichnungsmittel gelöst oder dispergiert ist, umfaßt, wobei das Aufzeichnungsmittel eine magenta-farbene Komponente und eine gelbe Komponente umfaßt, wobei die magenta-farbene Komponente aus einem Farbstoff, der durch die folgende Formel (A) dargestellt wird: 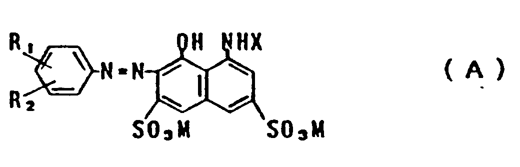 wobei R₁ und R₂ jeweils einen aus der aus Wasserstoff, einem Methylrest, einem Methoxyrest, einem Chloratom, einer Sulfonsäuregruppe, einem Phenoxyrest, 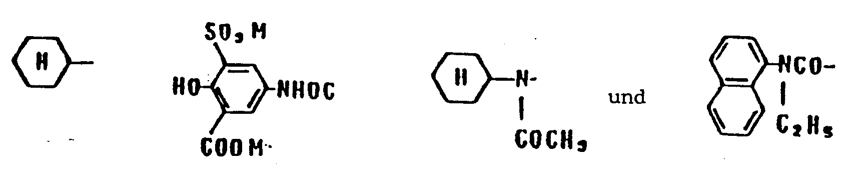 bestehenden Gruppe ausgewählten Rest darstellen, X die verbleibende Gruppe einer organischen Säure darstellt, und M einen aus der aus einem Alkalimetall, einer Ammoniumgruppe und einer organischen Amingruppe bestehenden Gruppe ausgewählten Basenbestandteil darstellt, und C.I. Direct Red 227 zusammengesetzt ist, und wobei die gelbe Komponente aus mindestens einem der Farbstoffe C.I. Direct Yellow 86 und C.I. Direct Yellow 142 zusammengesetzt ist.

5. Aufzeichnungslösung nach Anspruch 4, die in einem Aufzeichnungssystem verwendet wird, bei dem die Aufzeichnung durch Anwendung von einem Aufzeichnungssignal entsprechender Wärmeenergie auf eine Aufzeichnungslösung im Raum eines Aufzeichnungskopfes durchgeführt wird, wobei die Energie bewirkt, daß Tintentröpfchen auf eine Aufzeichnungsoberfläche fliegen.

6. Aufzeichnungslösung nach Anspruch 4, wobei der durch die Formel (A) dargestellte Farbstoff 10 bis 90 Gew.-% in den gesamten Aufzeichnungsmitteln ausmacht.

7. Aufzeichnungslösung nach Anspruch 4, wobei C.I. Direct Red 227 20 bis 60 Gew.-% in den gesamten Aufzeichnungsmitteln ausmacht.

8. Aufzeichnungslösung nach Anspruch 4, wobei das flüssige Medium einen mehrwertigen Alkohol oder einen aliphatischen einwertigen Alkohol umfaßt.

9. Aufzeichnungslösung nach Anspruch 8, wobei der mehrwertige Alkohol mindestens ein aus der aus Ethylenglycol, Thiodiglycol und Glycerin bestehenden Gruppe ausgewählter Alkohol ist.

10. Aufzeichnungslösung nach Anspruch 8, wobei der aliphatische einwertige Alkohol aus der aus Methylalkohol, Ethylalkohol, Isopropylalkohol und n-Butylalkohol bestehenden Gruppe ausgewählt ist.

11. Aufzeichnungslösung, die ein Aufzeichnungsmittel, bei dem es sich um eine Komponente handelt, die zu einem aufgezeichneten Bild führt, und ein flüssiges Medium, in dem das Aufzeichnungsmittel gelöst oder dispergiert ist, umfaßt, wobei das Aufzeichnungsmittel eine magenta-farbene Komponente und eine cyanblaue Komponente umfaßt, wobei die magenta-farbene Komponente aus einem Farbstoff, der durch die folgende Formel (A) dargestellt wird: 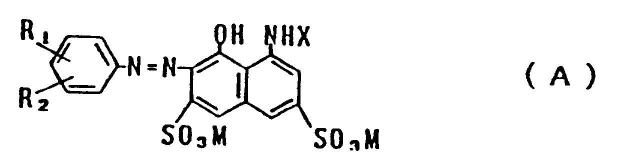 wobei R₁ und R₂ jeweils einen aus der aus Wasserstoff, einem Methylrest, einem Methoxyrest, einem Chloratom, einer Sulfonsäuregruppe, einem Phenoxyrest, 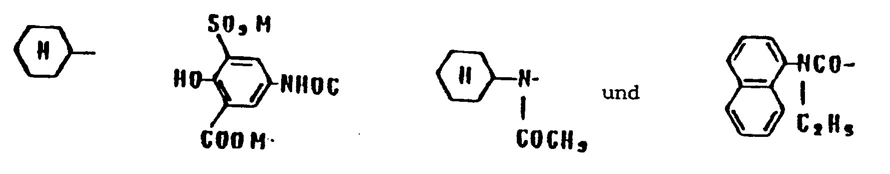 bestehenden Gruppe ausgewählten Rest darstellen, X die verbleibende Gruppe einer organischen Säure darstellt, und M einen aus der aus einem Alkalimetall, einer Ammoniumgruppe und einer organischen Amingruppe bestehenden Gruppe ausgewählten Basenbestandteil darstellt, und C.I. Direct Red 227 zusammengesetzt ist, und wobei die cyanblaue Komponente aus mindestens einem aus der aus C.I. Direct Blue 199, C.I. Direct Blue 86 und C.I. Acid Blue 198 bestehenden Gruppe ausgewählten Farbstoff besteht.

12. Aufzeichnungslösung nach Anspruch 11, die in einem Aufzeichnungssystem verwendet wird, bei dem die Aufzeichnung durch Einwirkung von einem Aufzeichnungssignal entsprechender Wärmeenergie auf eine Aufzeichnungslösung im Raum eines Aufzeichnungskopfes durchgeführt wird, wobei die Energie bewirkt, daß Tintentröpfchen auf eine Aufzeichnungsoberfläche fliegen.

13. Aufzeichnungslösung nach Anspruch 11, wobei der durch die Formel (A) dargestellte Farbstoff 2 bis 50 Gew.-% in den gesamten Aufzeichnungsmitteln ausmacht.

14. Aufzeichnungslösung nach Anspruch 11, wobei C.I. Direct Red 227 5 bis 30 Gew.-% in den gesamten Aufzeichnungsmitteln ausmacht.

15. Aufzeichnungslösung nach Anspruch 11, wobei das flüssige Medium einen mehrwertigen Alkohol oder einen aliphatischen einwertigen Alkohol umfaßt.

16. Aufzeichnungslösung nach Anspruch 15, wobei der mehrwertige Alkohol mindestens ein aus der aus Ethylenglycol, Thiodiglycol und Glycerin bestehenden Gruppe ausgewählter Alkohol ist.

17. Aufzeichnungslösung nach Anspruch 15, wobei der aliphatische einwertige Alkohol aus der aus Methylalkohol, Ethylalkohol, Isopropylalkohol und n-Butylalkohol bestehenden Gruppe ausgewählt ist.

18. Aufzeichnungslösung nach einem der Ansprüche 1, 4 oder 11, wobei es sich bei der Verbindung der Formel (A) um mindestens eine der nachstehend gezeigten Verbindungen handelt:

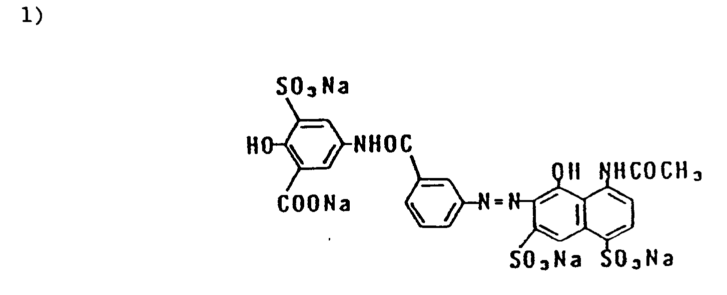

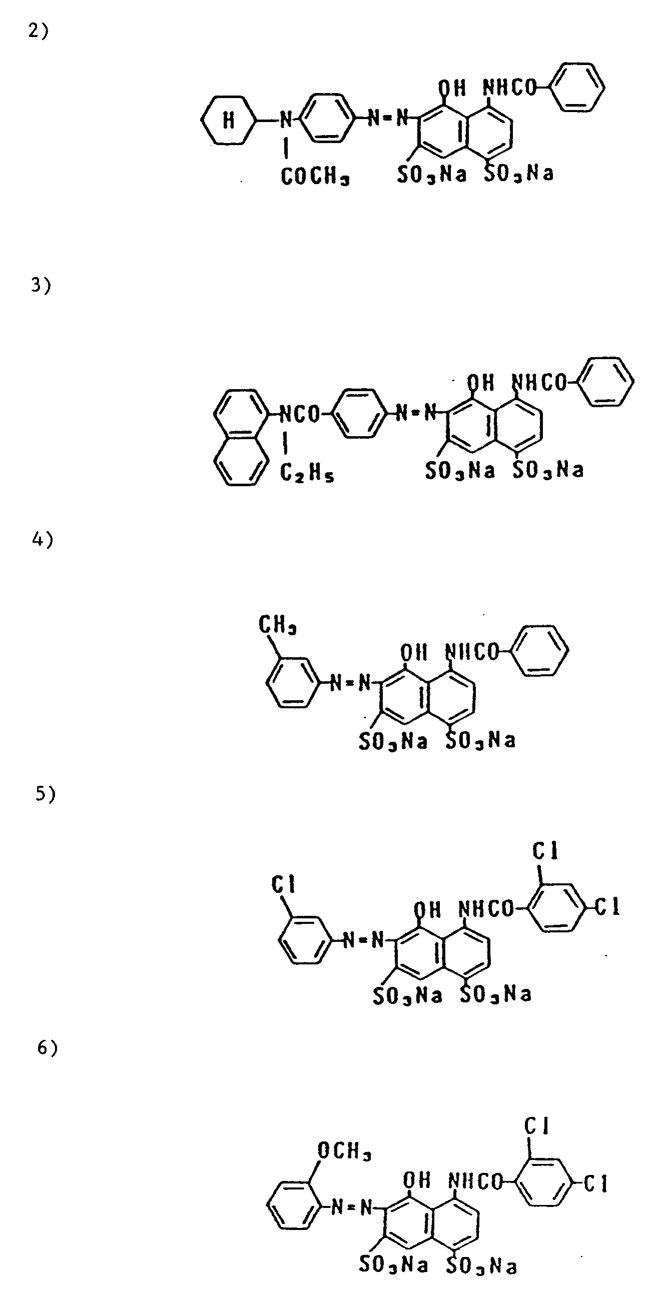

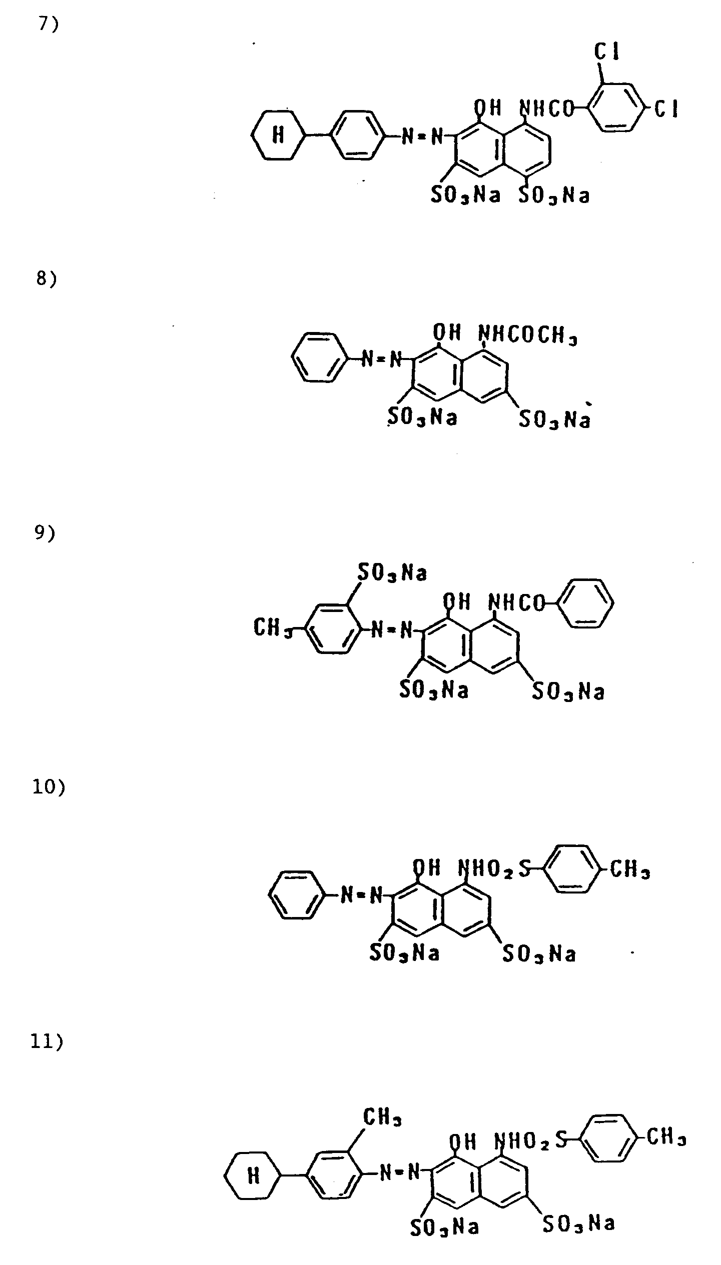

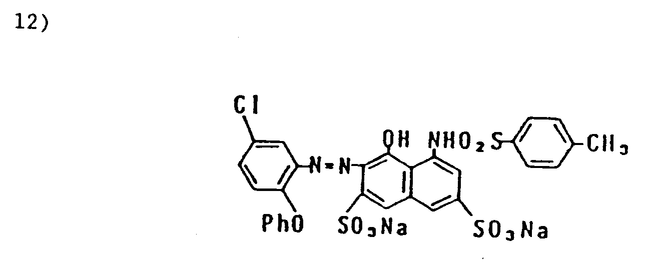

## Revendications

1. Solution d'enregistrement, comprenant un agent d'enregistrement qui est un composant formant une image enregistrée, et un milieu liquide dans lequel ledit agent d'enregistrement est dissous ou dispersé, l'agent d'enregistrement comprenant un colorant représenté par la formule (A) 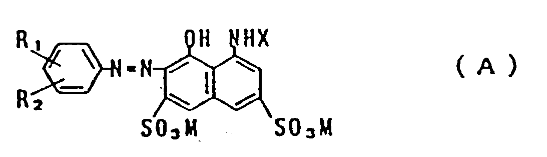 R₁ et R₂ représentent chacun un radical choisi dans le groupe comprenant l'hydrogène, un radical méthyle, un radical méthoxy, un atome de chlore, un résidu d'acide sulfonique, un radical phénoxy 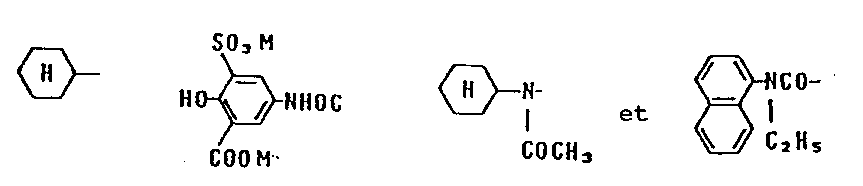 X représente un groupe résiduel d'un acide organique ; et M représente une base choisie dans le groupe comprenant un métal alcalin, un groupe ammonium et un groupe amine organique ; et au moins un colorant choisi dans le groupe comprenant le Rouge Acide C.I. 131, le Rouge Acide C.I. 274, le Rouge Direct C.I. 227 et le Rouge Direct C.I. 9.

2. Solution d'enregistrement suivant la revendication 1, dans laquelle l'agent d'enregistrement comprend le colorant représenté par la formule (A) et le Rouge Direct C.I. 227.

3. Solution d'enregistrement suivant la revendication 1, dans laquelle le colorant représenté par la formule (A) est présent en une quantité de 20 à 80 % en poids sur la base du poids total des agents d'enregistrement.

4. Solution d'enregistrement comprenant un agent d'enregistrement qui est un composant formant une image enregistrée et un milieu liquide dans lequel l'agent d'enregistrement est dissous ou dispersé, dans laquelle l'agent d'enregistrement comprend un composant magenta et un composant jaune, ledit composant magenta étant constitué d'un colorant représenté par la formule (A) 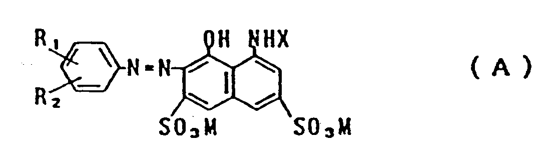 R₁ et R₂ représentent chacun un radical choisi dans le groupe comprenant l'hydrogène, un radical méthyle, un radical méthoxy, un atome de chlore, un résidu d'acide sulfonique, un radical phénoxy 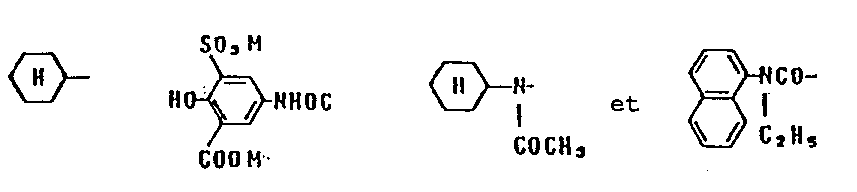 X représente un groupe résiduel d'un acide organique ; et M représente une base choisie dans le groupe comprenant un métal alcalin, un groupe ammonium et un groupe amine organique ; et du Rouge Direct C.I. 27 ; le colorant jaune étant constitué d'au moins l'un des colorants Jaune Direct C.I. 86 et Jaune Direct C.I. 142.

5. Solution d'enregistrement suivant la revendication 4, qui est utilisée dans un système d'enregistrement dans lequel l'enregistrement est effectué par application d'une énergie thermique correspondant à un signal d'enregistrement, à une solution d'enregistrement dans l'espace occupé par une tête d'enregistrement, ladite énergie ayant pour effet de projeter des gouttes d'encre sur une surface d'enregistrement.

6. Solution d'enregistrement suivant la revendication 4, dans laquelle le colorant représenté par la formule (A) compte pour 10 à 90 % en poids dans la totalité des agents d'enregistrement.

7. Solution d'enregistrement suivant la revendication 4, dans laquelle le Rouge Direct C.I. 227 compte pour 20 à 60 % en poids dans la totalité des agents d'enregistrement.

8. Solution d'enregistrement suivant la revendication 4, dans laquelle le milieu liquide comprend un alcool polyhydroxylique ou un alcool aliphatique monovalent.

9. Solution d'enregistrement suivant la revendication 8, dans laquelle l'alcool polyhydroxylique est au moins un alcool choisi dans le groupe comprenant l'éthylèneglycol, le thiodiglycol et le glycérol.

10. Solution d'enregistrement suivant la revendication 8, dans laquelle l'alcool aliphatique monovalent est choisi dans le groupe comprenant l'alcool méthylique, l'alcool éthylique, l'alcool isopropylique et l'alcool n-butylique.

11. Solution d'enregistrement, comprenant un agent d'enregistrement qui est un composant qui forme une image enregistrée, et un milieu liquide dans lequel ledit agent d'enregistrement est dissous ou dispersé, l'agent d'enregistement comprenant un composant magenta et un composant cyan, le composant magenta étant constitué d'un colorant représenté par la formule (A) 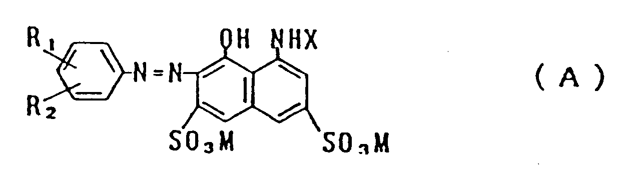 où R₁ et R₂ représentent chacun un radical choisi dans le groupe d'hydrogène, d'un radical méthyle, d'un radical méthoxy, d'un atome de chlore, d'un résidu d'acide sulfonique, d'un radical phénoxy, 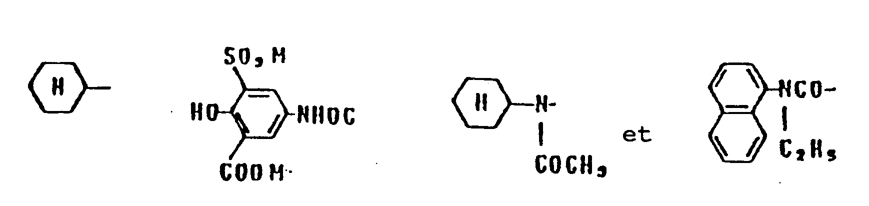 X représente un groupe résiduel d'un acide organique ; et M représente une base choisie dans le groupe comprenant un métal alcalin, un groupe ammonium et un groupe amine organique ; et le colorant Rouge Direct C.I. 227 ; le composant cyan étant constitué d'au moins l'un des colorants du groupe comprenant le Bleu Direct C.I. 199, le Bleu Direct C.I. 86 et le Bleu Acide C.I. 198.

12. Solution d'enregistrement suivant la revendication 11, qui est utilisée dans un système d'enregistrement dans lequel l'enregistrement est effectué par application d'une énergie thermique correspondant à un signal d'enregistrement, à une solution d'enregistrement dans l'espace entourant une tête d'enregistrement, ladite énergie projetant des gouttelettes d'encre sur une surface d'enregistrement.

13. Solution d'enregistrement suivant la revendication 11, dans laquelle le colorant représenté par la formule (A) compte pour 2 à 50 % en poids dans le total des agents d'enregistrement.

14. Solution d'enregistrement suivant la revendication 11, dans laquelle le Rouge Direct C.I. 227 compte pour 5 à 30 % en poids dans le total des agents d'enregistrement.

15. Solution d'enregistrement suivant la revendication 11, dans laquelle le milieu liquide comprend un alcool polyhydroxylique ou un alcool aliphatique monovalent.

16. Solution d'enregistrement suivant la revendication 15, dans laquelle l'alcool polyhydroxylique est au moins un alcool choisi dans le groupe comprenant l'éthylèneglycol, le thiodiglycol et le glycérol.

17. Solution d'enregistrement suivant la revendication 15, dans laquelle l'alcool aliphatique monovalent est choisi dans le groupe comprenant l'alcool méthylique, l'alcool éthylique, l'alcool isopropylique et l'alcool n-butylique.

18. Solution d'enregistrement suivant l'une quelconque des revendications 1, 4 et 11, dans laquelle un composé de formule (A) est au moins l'un des composés représentés ci-dessous :
